## Europäisches Patentamt
## European Patent Office
## Office européen des brevets

(19)

(11) Numéro de publication: **0 087 343**
**B1**

(12)

# FASCICULE DE BREVET EUROPEEN

(45) Date de publication du fascicule du brevet:
**02.05.85**

(51) Int. Cl.⁴: **C 07 C 179/10**, C 07 C 179/12,
A 01 N 37/16

(21) Numéro de dépôt: **83400253.7**

(22) Date de dépôt: **07.02.83**

(54) Solutions commerciales de peracides carboxyliques stables et non corrosives et leurs applications.

(30) Priorité: **24.02.82 FR 8203000**

(43) Date de publication de la demande:
**31.08.83 Bulletin 83/35**

(45) Mention de la délivrance du brevet:
**02.05.85 Bulletin 85/18**

(84) Etats contractants désignés:
**BE CH DE FR GB IT LI NL SE**

(56) Documents cités:
**EP - A - 0 024 219**
**FR - A - 2 321 302**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Jourdan Laforte, Eric, 67, rue La Fontaine, F-75016 Paris (FR)**
Inventeur: **Le Rouzic, Daniel, 6, rue des Cités, F-93300 Aubervilliers (FR)**

(74) Mandataire: **Bouton Neuvy, Liliane et al, L'Air liquide, Société Anonyme pour L'Etude et L'Exploitation des Procédés Georges Claude 75, Quai d'Orsay, F-75321 Paris Cedex 07 (FR)**

ACTORUM AG

## Description

La présente invention concerne des solutions commerciales de peracides carboxyliques stables dans le temps et non corrosives.

Les solutions de peracides carboxyliques sont généralement obtenues par actions du peroxyde d'hydrogène sur l'acide carboxylique correspondant. Par le brevet français N° 2462425, on connaît un procédé notamment applicable à la préparation de solutions diluées stables d'acide peracétique. Selon ce procédé, on prépare une solution concentrée de peracide carboxylique aliphatique à partir de l'acide ou de l'anhydride correspondant et de peroxyde d'hydrogène concentré, en présence de la quantité minimale d'un catalyseur acide fort, nécessaire à l'obtention de l'équilibre du système dans un délai maximal de 48 h; dans un second stade, on dilue ladite solution concentrée de peracide aliphatique avec une solution contenant au moins un constituant réactionnel pour amener la concentration en peracide aliphatique à la concentration nominale du mélange. Ce procédé permet de préparer rapidement à l'échelle industrielle des solutions de peracides carboxyliques aliphatiques sous la forme aqueuse contenant quelques pour-cent en poids d'un peracide et restant stable dans le temps. Ainsi, on obtient aisément, et dans de très bonnes conditions industrielles, des solutions diluées contenant entre 1 et 20% en poids de peracide carboxylique, en particulier d'acide monoperacétique. Préférentiellement, la concentration des solutions préparées est de 2 à 5% en poids de peracide carboxylique.

Ces solutions diluées de peracides sont plus appréciées en raison de leur grande facilité de transport et de manipulation que les solutions concentrées, en raison du caractère comburant du peracide, parfois de son odeur et de ses propriétés irritantes à l'égard de la peau, des yeux et des voies respiratoires.

Les solutions d'acide peracétique, par exemple, sont particulièrement adaptées à la stérilisation d'enceintes aseptiques, telles les couveuses pour prématurés ou l'élevage des animaux axéniques, et la désinfection des locaux et matériels hospitaliers.

De telles solutions sont également utilisées pour la désinfection des surfaces des plans de travail, des locaux et des matériels de l'industrie alimentaire. Elles trouvent aussi des applications comme agents de désinfection et de stérilisation dans les opérations de nettoyage des parois internes des appareils et des circuits des unités de fabrication de l'industrie alimentaire.

En matière de technologie alimentaire, l'acier inoxydable tend de plus en plus à s'imposer au détriment de l'aluminium et des autres matériaux traditionnels (fer étamé, bois, etc.). La qualité d'acier inoxydable la plus répandue contient 18% de chrome et 10% de nickel. Bien que cet acier inoxydable soit pratiquement inerte à l'égard des produits alimentaires, la plupart des agents de désinfection et de stérilisation autorisés dans l'industrie alimentaire provoquent des corrosions de l'acier inoxydable; c'est le cas par exemple des produits chlorés.

Généralement, les solutions commerciales d'acide peracétique sont diluées avant l'emploi par de l'eau pour amener la concentration en acide peracétique entre 30 et 300 mg/l. Quelle que soit sa concentration, une solution d'acide peracétique diluée par de l'eau désionisée ne corrode pas les aciers inoxydables couramment utilisés dans l'industrie alimentaire mais, compte tenu des volumes d'eau mis en jeu, notamment dans la désinfection en industrie alimentaire, la désinfection du matériel par ce procédé est économiquement rédhibitoire.

Lorsque l'eau de dilution est une eau ordinaire qui contient des traces de chlorures dissous, on constate une corrosion par piqûres ou caverneuse de certaines nuances d'acier inoxydable. Cette corrosion est liée à la présence de chlorures dans l'eau ordinaire qui sont oxydés par les peracides.

Cette corrosion est particulièrement insidieuse, car elle se produit dans des endroits où les liquides sont préférentiellement non agités; elle se situe, par exemple, dans les zones mortes des joints, des raccords, des vannes et des tuyauteries. Ces zones mortes sont difficiles à nettoyer lors des opérations de rinçage à l'eau claire puis de nettoyage à la soude et à l'acide nitrique, lesquelles précèdent habituellement la phase de désinfection. Le problème est particulièrement critique pour l'industrie laitière. Le lait a en effet une tendance marquée à laisser sur les parois internes des tuyauteries et des appareils, surtout lorsqu'ils sont chauffés, un film de matières organiques constitué par des matières grasses, des matières azotées et des sels minéraux; ces souillures favorisent le développement de la flore microbienne; ce problème est évidemment encore accru lorsqu'il existe un phénomène de corrosion caverneuse qui rend ces foyers bactériens pratiquement inaccessibles aux agents de nettoyage et de désinfection.

Le lait étant, d'autre part, un milieu favorable au développement des germes, les responsables de l'industrie laitière sont particulièrement soucieux du maintien de leur matériel dans un état d'asepsie satisfaisant; ils doivent par conséquent rechercher le meilleur compromis entre l'efficacité des agents de nettoyage et de désinfection et le risque de dégradation de leur matériel; dans ces conditions, l'utilisation d'un agent de désinfection efficace sur le plan microbiologique et non corrosif à l'égard du matériel est particulièrement appréciée.

Il a été trouvé que l'addition d'acide nitrique, en tant qu'acide à caractère oxydant, à une solution commerciale de peracide carboxylique réduit sensiblement le risque de corrosion de l'acier inoxydable lorsque ladite solution commerciale de peracide est diluée avec de l'eau ordinaire contenant des chlorures.

L'acide nitrique, introduit en quantité adaptée, permet de repousser les risques de corrosion à des potentiels d'oxydation nettement plus élevés que ceux rencontrés dans les conditions habituelles de désinfection des matériels en acier inoxydable.

L'acide nitrique conduit à des résultats très appréciés, en permettant principalement de remédier au problème de la corrosion caverneuse observée notamment lors de la désinfection du matériel de l'industrie alimentaire réalisée dans les nuances courantes d'acier inoxydable, et lorsque les solutions commerciales de peracide carboxylique, en particulier d'acide peracétique, sont diluées à l'eau ordinaire. De plus, l'acide nitrique incorporé à la solution commerciale d'acide peracétique est un agent anticorrosion bon marché, autorisé en désinfection alimentaire et qui n'affecte pas la stabilité de l'acide peracétique. En effet, malgré une forte concentration en acide nitrique présente dans la solution commerciale de peracide, celle-ci reste très stable et peut être conservée plusieurs mois.

Avantageusement, l'acide nitrique est présent dans les solutions commerciales dans un pourcentage pondéral au moins égal à celui du peracide carboxylique, de préférence 3 à 5 fois le pourcentage pondéral du peracide organique dans ladite solution commerciale. Les solutions commerciales diluées contenant entre 1 et 20%, de préférence de 2 à 5% en poids de peracide carboxylique, la concentration desdites solutions en acide nitrique sera de préférence comprise entre 6 et 15% en poids. En particulier les solutions à 2% en poids d'acide peracétique et 8% en poids d'acide nitrique qui sont utilisées à la dose de 50 mg d'acide péracétique par litre ne peuvent pas provoquer la corrosion caverneuse de l'acier inoxydable type 18-10.

Les solutions commerciales de peracides carboxyliques selon l'invention trouvent des applications en tant qu'agents de désinfection et de stérilisation des enceintes aseptiques et dans les appareils et circuits de l'industrie alimentaire, en particulier dans le domaine de la désinfection microbiologique des installations dans l'industrie laitière.

Ces solutions de peracides carboxyliques à usage désinfectant et stérilisant sont obtenues par introduction, dans la solution commerciale de peracide carboxylique, contenant en particulier 2 à 5% en poids d'acide peracétique, d'acide nitrique en quantité telle que son pourcentage pondéral corresponde à 3 à 5 fois celui de l'acide peracétique, puis par dilution par de l'eau ordinaire jusqu'à une concentration en acide peracétique comprise entre 30 et 300 mg/l.

Après rinçage, nettoyage à la soude dans les conditions classiques, nouveau rinçage à l'eau courante, des appareils et circuits notamment de l'industrie laitière sont désinfectés microbiologiquement par simple traitement par les solutions diluées, à concentration entre 30 et 300 mg/l d'acide peracétique et contenant de l'acide nitrique, pendant une durée relativement brève, de l'ordre de 10 à 30 min, de préférence 15 à 20 min, à la température ambiante.

Sont donnés ci-après des exemples qui illustrent l'invention à titre non limitatif.

Les essais sont réalisés avec un acier inoxydable austénique de composition (masse %) : chrome = 18; nickel = 9,9; carbone = 0,025; manganèse = 1,5. On découpe des échantillons de format 100×50×2 mm dans des tôles industrielles, laminées à froid et ayant subi une hypertrempe à 1050-1150° C. Les faces des échantillons — qui constituent en fait la surface d'épreuve — sont polies sous courant d'eau au papier abrasif (N° 220 - 80 μm), puis passivées à l'air pendant 30 min. L'aire d'épreuve est délimitée à l'aide de vernis, tel le vernis vendu sous la marque commerciale Lacomit N 2567A, afin d'éviter toute corrosion parasite au niveau de la ligne d'eau. L'aire d'épreuve est de 50 cm² en comptant les deux faces de l'éprouvette.

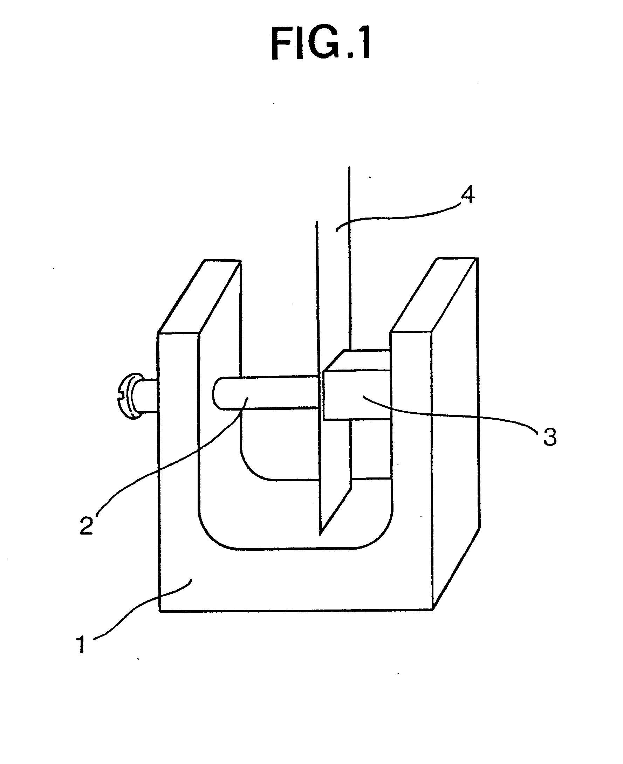

Le dispositif expérimental, représenté sur la fig. 1, permet de créer artificiellement une surface réduite de l'ordre de 0,5 cm² dans laquelle une corrosion caverneuse se développera préférentiellement. Ce dispositif est composé d'un étrier 1 en matière plastique équipé d'une vis 2 en même matériau, sur une de ses branches, et d'une butée 3 en caoutchouc sur l'autre branche. Ce joint 3 en caoutchouc est fixé par simple serrage de la vis 2 sur l'éprouvette 4 précédemment préparée.

diluées à l'eau ordinaire. De plus, l'acide nitrique incorporé à la solution commerciale d'acide peracétique est un agent anticorrosion bon marché, autorisé en désinfection alimentaire et qui n'affecte pas la stabilité de l'acide peracétique. En effet, malgré une forte concentration en acide nitrique présente dans la solution commerciale de peracide, celle-ci reste très stable et peut être conservée plusieurs mois.

Avantageusement, l'acide nitrique est présent dans les solutions commerciales dans un pourcentage pondéral au moins égal à celui du peracide carboxylique, de préférence 3 à 5 fois le pourcentage pondéral du peracide organique dans ladite solution commerciale. Les solutions commerciales diluées contenant entre 1 et 20%, de préférence de 2 à 5% en poids de peracide carboxylique, la concentration desdites solutions en acide nitrique sera de préférence comprise entre 6 et 15% en poids. En particulier les solutions à 2% en poids d'acide peracétique et 8% en poids d'acide nitrique qui sont utilisées à la dose de 50 mg d'acide péracétique par litre ne peuvent pas provoquer la corrosion caverneuse de l'acier inoxydable type 18-10.

Les solutions commerciales de peracides carboxyliques selon l'invention trouvent des applications en tant qu'agents de désinfection et de stérilisation des enceintes aseptiques et dans les appareils et circuits de l'industrie alimentaire, en particulier dans le domaine de la désinfection microbiologique des installations dans l'industrie laitière.

Ces solutions de peracides carboxyliques à usage désinfectant et stérilisant sont obtenues par introduction, dans la solution commerciale de peracide carboxylique, contenant en particulier 2 à 5% en poids d'acide peracétique, d'acide nitrique en quantité telle que son pourcentage pondéral corresponde à 3 à 5 fois celui de l'acide peracétique, puis par dilution par de l'eau ordinaire jusqu'à une concentration en acide peracétique comprise entre 30 et 300 mg/l.

Après rinçage, nettoyage à la soude dans les conditions classiques, nouveau rinçage à l'eau courante, des appareils et circuits notamment de l'industrie laitière sont désinfectés microbiologiquement par simple traitement par les solutions diluées, à concentration entre 30 et 300 mg/l d'acide peracétique et contenant de l'acide nitrique, pendant une durée relativement brève, de l'ordre de 10 à 30 min, de préférence 15 à 20 min, à la température ambiante.

Sont donnés ci-après des exemples qui illustrent l'invention à titre non limitatif.

Les essais sont réalisés avec un acier inoxydable austénique de composition (masse %) : chrome = 18; nickel = 9,9; carbone = 0,025; manganèse = 1,5. On découpe des échantillons de format 100×50×2 mm dans des tôles industrielles, laminées à froid et ayant subi une hypertrempe à 1050-1150° C. Les faces des échantillons — qui constituent en fait la surface d'épreuve — sont polies sous courant d'eau au papier abrasif (N° 220 - 80 μm), puis passivées à l'air pendant 30 min. L'aire d'épreuve est délimitée à l'aide de vernis, tel le vernis vendu sous la marque commerciale Lacomit N 2567A, afin d'éviter toute corrosion parasite au niveau de la ligne d'eau. L'aire d'épreuve est de 50 cm$^2$ en comptant les deux faces de l'éprouvette.

Le dispositif expérimental, représenté sur la fig. 1, permet de créer artificiellement une surface réduite de l'ordre de 0,5 cm$^2$ dans laquelle une corrosion caverneuse se développera préférentiellement. Ce dispositif est composé d'un étrier 1 en matière plastique équipé d'une vis 2 en même matériau, sur une de ses branches, et d'une butée 3 en caoutchouc sur l'autre branche. Ce joint 3 en caoutchouc est fixé par simple serrage de la vis 2 sur l'éprouvette 4 précédemment préparée.

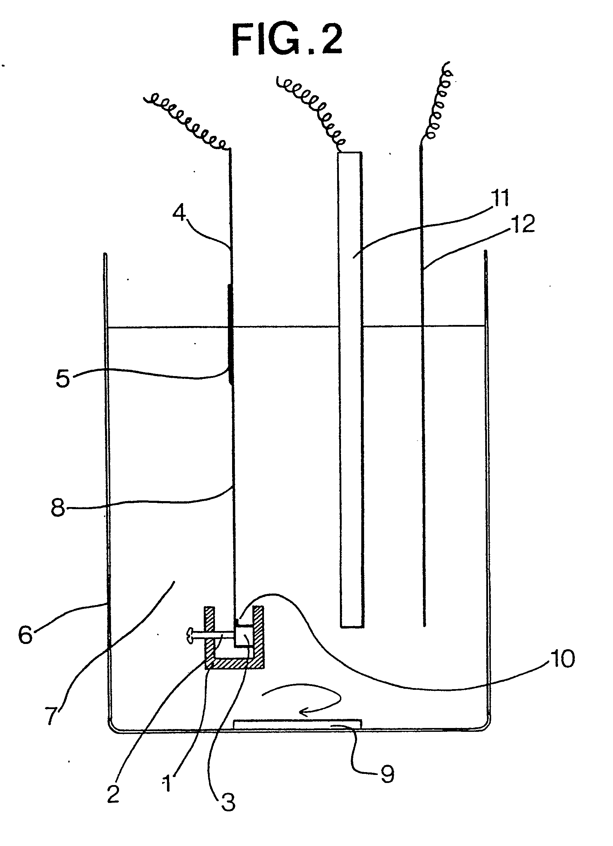

Puis on procède à l'étude de la corrosion caverneuse dans le dispositif expérimental représenté sur la fig. 2. L'éprouvette 4 revêtue du vernis 5 isolant de la ligne air-eau, et équipée de l'ensemble étrier selon la fig. 1, est plongée dans la cuve 6 contenant la solution 7 à étudier, à une profondeur telle que toute l'aire d'épreuve non vernie 8 soit immergée. La solution est agitée par action du barreau aimanté 9. La corrosion caverneuse se produit dans la zone 10. Entre l'éprouvette et une électrode au calomel saturé E.C.S. 11, servant de référence, un millivoltmètre à forte impédance d'entrée (10$^6$ MΩ) — non représentée — mesure la différence de potentiel. Lorsque aucune corrosion caverneuse n'a pu être détectée après 24 h, on complète le montage avec une électrode de platine 12, permettant l'enregistrement des variations d'intensité lorsque l'on impose, par un potentiostat — non représenté — une différence de potentiel croissante entre les deux premières électrodes.

Les essais sont conduits en comparaison entre l'acide peracétique et l'hypochlorite de sodium. Pour cela, on utilise une solution d'hypochlorite de sodium commerciale titrant 35,6° chlorométriques et, d'autre part, une solution d'acide peracétique ayant la composition suivante:

| | |
|---|---|
| Acide peracétique | 2% en poids |
| Acide acétique | 6,1% en poids |
| Eau oxygénée | 19,9% en poids |
| Acide nitrique | 8,0% en poids |
| Acide hydroxyéthane-diphosphonique | 0,3% en poids |
| Eau | 63,7% en poids |

Les solutions d'essai sont préparées par dissolution des produits concentrés dans l'eau ordinaire dont la teneur en équivalents ClNa est de 50 mg/l.

L'étude de la corrosion est réalisée à l'aide de méthodes électrochimiques qui consistent à tracer des courbes du potentiel électrochimique de l'acier inoxydable en fonction du temps (courbe E en fonction du temps). Toute les valeurs de potentiel sont exprimées en millivolts par rapport à l'électrode au calomel saturé (mV/E.C.S.). Lorsque la corrosion caverneuse se développe spontanément, ce qui se traduit par une chute faible mais brutale du potentiel, on mesure la durée avant corrosion caverneuse ($t_{cav}$) et la valeur du potentiel de corrosion ($E_{cav}$), $t_{cav}$ étant cependant le critère essentiel de résistance à la corrosion caverneuse.

Lorsque aucune corrosion ne se produit à l'issue de la courbe E en f (t), on mesure alors la valeur du potentiel libre (E1) de l'acier inoxydable après 24 h (E1-24 h) puis on trace, à partir de cette valeur, la courbe de polarisation anodique, i en f (E), en faisant varier le potentiel E de 1 à 6 mV/h. Lorsque la corrosion caverneuse se développe, l'intensité augmente; le potentiel auquel se produit cette augmentation est appelé potentiel de corrosion caverneuse ($E_{cav}$). Dans ce cas, la différence $E_{cav}$-E1-24 h est considérée comme représentative de la résistance à la corrosion caverneuse.

On réalise deux types d'essais. Selon le premier type dit par immersion prolongée, les échantillons d'acier inoxydable, après polissage et passivation à l'air pendant 30 min, sont immergés soit dans une solution d'hypochlorite de sodium à 300 mg de Cl$_2$/l, 20° C, soit dans une solution d'acide peracétique à 50 mg/l d'acide peracétique, soit dans une solution d'acide peracétique à 50 mg/l contenant de l'acide nitrique à 20° C, pendant des durées pouvant atteindre 24 h quand aucune corrosion spontanée ne se produit.

Le second type d'essai par immersion-émersion alternées a pour but de simuler la pratique industrielle où le matériel est en contact successivement avec divers milieux (par exemple lait, solutions de nettoyage et de désinfection, eaux de rinçage) et de suivre son comportement sur le plan de la corrosion; il peut éventuellement être différent de celui des échantillons qui ne sont en contact qu'avec la solution désinfectante. En conséquence, certains échantillons d'acier inoxydable ont subi les opérations suivantes: immersion dans du lait à 70° C pendant 10 min; rinçage à l'eau courante pendant 5 min; nettoyage dans une solution de soude à 2%, à 70° C, pendant 10 min; rinçage à l'eau courante pendant 5 min; désinfection dans une solution d'acide peracétique à

50 mg/l, à 20° C, pendant 15 min et rinçage à l'eau courante pendant 5 min. L'ensemble de ces opérations constitue 1 cycle. Durant les opérations de désinfection, l'évolution du potentiel de l'acier inoxydable est enregistrée et sa valeur, à la fin de chaque désinfection, est notée.

Les résultats obtenus selon le premier type d'essai par immersion prolongée sont consignés dans le tableau.

Les résultats de ce tableau montrent que la solution d'hypochlorite de sodium à 300 mg de Cl$_2$/l, à 20° C, provoque la corrosion caverneuse de l'acier inoxydable après des durées de contact variant de 6½ h à 13 h 40 min.

On constate que la solution d'acide peracétique contenant initialement 6,8% d'acide nitrique provoque la corrosion caverneuse après 22 h. Il est à noter que ces durées sont cependant largement supérieures à la durée de la désinfection qui est généralement de 10 à 20 min. Par contre, la solution d'acide peracétique contenant initialement 8% d'acide nitrique ne donne aucune corrosion caverneuse après 24 h d'essai.

Dans les conditions d'essais, l'acide peracétique contenant de l'acide nitrique est donc bien moins agressif que l'hypochlorite de sodium vis-à-vis de l'acier inoxydable du type 18-10.

La marge de sécurité d'emploi de l'acier inoxydable E au contact de solutions d'acide peracétique à 50 mg/l et à 20° C varie de 115 à 145 mV, ce qui montre que le risque de corrosion caverneuse est pratiquement absent, même pour des durées d'immersion supérieures à 24 h, avec une solution d'acide peracétique à 2% en poids contenant 8% en poids d'acide nitrique.

*Tableau*

*Influence de la nature du produit désinfectant sur la durée avant corrosion caverneuse ($t_{cav}$), la valeur du potentiel de corrosion caverneuse ($E_{cav}$), la valeur du potentie l libre (E1 - 24 h) et la marge de sécurité d'emploi (différence entre $E_{cav}$ et E1 - 24 h) de l'acier inoxydable du type 18-10; polissage 220; passivation à l'air 30 min; température d'essai 20° C.*

| Produit | Concentra-tion en subs-tance active (mg/l) | Courbe E = f (t) | | | Courbe i = f (E) | | |
|---|---|---|---|---|---|---|---|
| | | $E_{cav}$ (mV/E.C.S.) | $t_{cav}$ | E1 - 24 h (mV/E.C.S.) | Vitesse de polarisation (mV/min) | $E_{cav}$ (mV/E.C.S.) | E $E_{cav}$ – E1 - 24 h (mV/E.C.S.) |
| Solution d'hypochlorite de sodium à 36° chlorométriques | 300 300 300 | + 95 + 25 +135 | 7 h 13 h 40 6 h 30 | | | | |
| Solution d'acide peracétique à 2% | 50 50 50 50 | +340 +300 +355 +328 | 4 h 10 2 h 05 4 h 26 4 h 33 | | | | |
| Solution d'acide peracétique à 2% à 6,8% de NO$_3$H | 50 | +420 | 22 h | | | | |
| Solution d'acide peracétique à 2% à 8% de NO$_3$H | 50 50 50 | | | +435 +475 +465 | 1 6 2 | +580 +600 +580 | 145 125 115 |

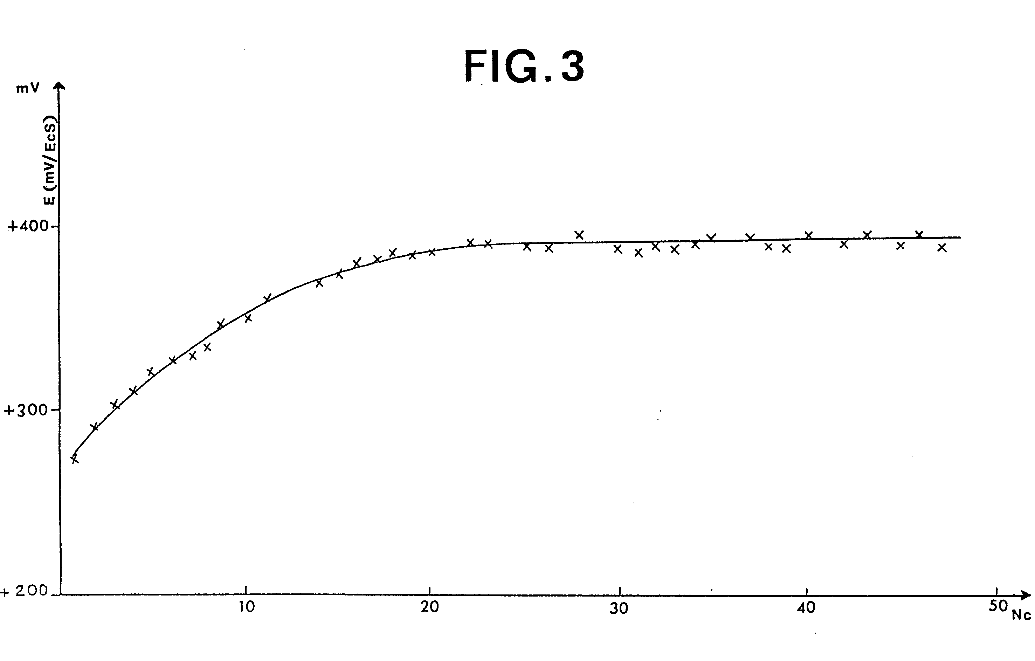

La fig. 3 du dessin annexé montre l'évolution du potentiel libre (E1) de l'acier inoxydable du type 18-10 en fonction du nombre de cycles dans le cadre d'essais avec du lait à 70° C pendant 10 min; rinçage sous eau courante pendant 5 min; nettoyage à la soude à 2% pendant 10 min à 70° C; rinçage sous eau courante pendant 5 min; traitement de désinfection par une solution commerciale d'acide peracétique à 2% en poids contenant 8% en poids d'acide nitrique utilisée à la dose de 50 mg d'acide peracétique par litre et à 20° C, pendant 15 min; dernier rinçage à l'eau courante pendant 5 min.

Les résultats sont portés sur la courbe; en ordonnées figure le potentiel E (mV/E.C.S.) exprimé en millivolts (mV) et en abscisses figure le nombre de cycles (Nc).

De la lecture des résultats apparaissant sur la fig. 3, on voit que le potentiel libre E1 de l'acier inoxydable, à l'issue des différentes désinfections réalisées dans les solutions d'acide peracétique à 50 mg/l contenant de l'acide nitrique, varie de 275 à 400 mV environ après 48 cycles. Pratiquement, le potentiel libre se stabilise à partir du 20$^e$ cycle. Or, la valeur du potentiel de corrosion caverneuse, déterminée précédemment, est de l'ordre de +580 mV (tableau, courbe i = f (E) colonne $E_{cav}$, mV/E.C.S.). Etant donné que la valeur maximale E1, à l'issue de 48 cycles, plafonne aux environs de +400 mV, il existe encore une marge de sécurité de 180 mV avant qu'il y ait réellement un risque de corrosion caverneuse. Cela montre que la solution commerciale d'acide peracétique à 2% en poids contenant 8% en poids d'acide nitrique, utilisée à la dose de 50 mg d'acide peracétique par litre et à 20° C, ne peut pas provoquer la corrosion caverneuse de l'acier inoxydable du type 18-10.

## Revendications

1. Solutions commerciales de peracides carboxyliques stables et non corrosives, caractérisées en ce qu'elles contiennent de l'acide nitrique en tant qu'acide à caractère oxydant.

2. Solutions commerciales de peracides carboxyliques selon la revendication 1, caractérisées en ce que l'acide nitrique est présent dans les solutions commerciales dans un pourcentage pondéral au moins égal à celui du peracide carboxylique.

3. Solutions commerciales de peracides carboxyliques selon l'une des revendications 1 ou 2, caractérisées en ce que l'acide nitrique y est présent dans un pourcentage pondéral compris entre 3 et 5 fois celui du peracide organique.

4. Solutions commerciales de peracides carboxyliques selon l'une des revendications 1 à 3, caratérisées en ce que le peracide carboxylique est l'acide peracétique.

5. Solutions commerciales de peracides carboxyliques selon la revendication 4, caractérisées en ce qu'elles contiennent entre 1 et 20%, de préférence de 2 à 5% en poids d'acide peracétique.

6. Application des solutions commerciales de peracides carboxyliques selon l'une des revendications 1 à 5 comme agent de désinfection et de stérilisation des enceintes aseptiques et dans les appareils et circuits de l'industrie alimentaire.

7. Application des solutions commerciales de peracides carboxyliques selon la revendication 5 à la désinfection microbiologique des installations en industrie laitière.

8. Préparation des solutions de peracides carboxyliques, en particulier d'acide peracétique, en vue de la désinfection et de la stérilisation selon l'une des revendications 6 ou 7, caractérisée en ce que l'on introduit dans la solution comerciale de peracide carboxylique, en particulier contenant de 2 à 5% en poids d'acide peracétique, de l'acide nitrique en une quantité telle que son pourcentage pondéral corresponde à 3 à 5 fois celui de l'acide peracétique, puis on procède à une dissolution par de l'eau ordinaire jusqu'à obtention d'une concentration en acide peracétique comprise entre 30 et 300 mg/l.

9. Application des solutions de peracides carboxyliques obtenues selon la revendication 8 à la stérilisation et à la désinfection microbiologique et dans les appareils et circuits de l'industrie alimentaire.

10. Application des solutions de peracides carboxyliques obtenues selon la revendication 8 à la désinfection microbiologique des installations en industrie laitière par traitement desdites installations par lesdites solutions à la température ambiante, pendant une durée comprise entre 10 et 30 min.

## Patentansprüche

1. Stabile und nicht korrosive handelsfähige Percarbonsäurelösungen, dadurch gekennzeichnet, dass sie als Säure mit oxidierendem Charakter Salpetersäure enthalten.

2. Handelsfähige Percarbonsäurelösungen nach Anspruch 1, dadurch gekennzeichnet, dass die Salpetersäure in den handelsüblichen Lösungen in einem Gewichtsprozentsatz wenigstens gleich dem der Percarbonsäure enthalten ist.

3. Handelsfähige Percarbonsäurelösungen nach einem der Ansprüche 1 oder 2, dadurch gekennzeichnet, dass die Salpetersäure in den handelsüblichen Lösungen in einem Gewichtsprozentsatz zwischen dem 3- und 5fachen desjenigen der organischen Persäure vorliegt.

4. Handelsfähige Percarbonsäurelösungen nach einem der Ansprüche 1 bis 3, dadurch gekennzeichnet, dass die Percarbonsäure Peressigsäure ist.

5. Handelsfähige Percarbonsäurelösungen nach Anspruch 4, dadurch gekennzeichnet, dass diese Lösungen 1 bis 20 vorzugsweise 2 bis 5 Gew.-% Peressigsäure enthalten.

6. Verwendung handelsfähiger Percarbonsäurelösungen nach einem der Ansprüche 1 bis 5 als Desinfektions- und Sterilisationsmittel für aseptische Räume und in Vorrichtungen und Leitungen der Lebensmittelindustrie.

7. Verwendung handelsfähiger Percarbonsäurelösungen nach Anspruch 5 zur mikrobiologischen Desinfektion von Einrichtungen der Milchindustrie.

8. Verfahren zur Herstellung von Percarbonsäurelösungen, insbesondere Peressigsäurelösungen, für die Desinfektion und die Sterilisation nach einem der Ansprüche 6 oder 7, dadurch gekennzeichnet, dass man in die handelsfähige Percarbonsäurelösung, besonders eine solche, die 2 bis 5 Gew.-% Peressigsäure enthält, Salpetersäure in solcher Menge einführt, dass ihr Gewichtsprozentsatz dem 3- bis 5fachen desjenigen der Peressigsäure entspricht, und dann weiter in gewöhnlichem Wasser auflöst, bis man eine Peressigsäurekonzentration zwischen 30 und 300 mg/l erhält.

9. Verwendung von Percarbonsäurelösungen, die nach Anspruch 8 erhalten wurden, zur Sterilisation und mikrobiologischen Desinfektion und in Apparaten und Leitungen der Nahrungsmittelindustrie.

10. Verwendung von Percarbonsäurelösungen, die nach Anspruch 8 erhalten wurden, zur mikrobiologischen Desinfektion von Einrichtungen der Milchindustrie durch Behandlung dieser Einrichtungen mit diesen Lösungen bei Umgebungstemperatur während einer Dauer von 10 bis 30 min.

## Claims

1. Stable and non-corrosive commercial solutions of percarboxylic acids, characterized in that they contain as acid of oxidizing character nitric acid.

2. Commercial solutions of percarboxylic acids according to Claim 1, characterized in that the nitric acid is present in the commercial solutions in a percentage by weight at least equal to that of the percarboxylic acid.

3. Commercial solutions of percarboxylic acids according to Claim 1 or 2, characterized in that the nitric acid is present in the commercial solutions in a percentage by weight between 3 and 5 times that of the organic peracid.

4. Commercial solutions of percarboxylic acids according to one of Claims 1 to 3, characterized in that the percarboxylic acid is peracetic acid.

5. Commercial solutions of percarboxylic acids according to Claim 4, characterized in that said solutions contain between 1 and 20, preferably 2 to 5% by weight of peracetic acid.

6. Use of commercial solutions of percarboxylic acids according to one of Claims 1 to 5 as disinfectant and sterilizing agent of aseptic rooms and in apparatus and conduits of the food stuff industry.

7. Use of commercial solutions of percarboxylic acids according to Claim 5 for the microbiological disinfection of installations of the milk industry.

8. Method of production of solutions of percarboxylic acids, especially of peracetic acid, for the disinfection and the sterilization according to Claim 6 or 7, characterized in that one introduces into the commercial solution of percarboxylic acid, especially containing 2 to 5% by weight of peracetic acid, nitric acid in such an amount that the percentage by weight thereof corresponds to 3 to 5 times that of the peracetic acid, and then one dissolves in ordinary water until one obtains a concentration of peracetic acid between 30 and 300 mg/l.

9. Use of solutions of percarboxylic acids obtained according to Claim 8 for the sterilization and microbiological disinfection and in the apparatus and conduits of the food stuff industry.

10. Use of solutions of percarboxylic acids obtained according to Claim 8 for the microbiological disinfection of installations of the milk industry by treatment of said installations by said solutions at ambient temperature between 10 and 30 min.

# FIG.1

# FIG.2

# FIG.3